# EUROPEAN PATENT SPECIFICATION

(11) **EP 3 263 803 B1**
(45) Date of publication and mention of the grant of the patent: **14.08.2019**
(21) Application number: 16177070.6
(22) Date of filing: 30.06.2016
(51) Int. Cl.: E04H 5/04, H02B 1/28, H02B 1/56, H02B 7/06

(54) **SUBSTATION**
UMSPANNSTATION
POSTE DE TRANSFORMATION

(43) Date of publication of application: 03.01.2018
(73) Proprietor: ABB Schweiz AG, 5400 Baden (CH)
(72) Inventor: PALGI, Ants, 74623 Harjumaa (EE); NIETO, Carlos, 74808 Kolgaküla küla, Harjumaa (EE); TURK, Danel, 10917 Talinn (EE); MOPPEL, Madis, 74111 Maardu linn (EE)
(74) Representative: Axell, Kristina

(56) References cited:
- CN-A- 102 394 479
- CN-U- 204 030 335
- JP-A- H06 217 424

## Description

### Technical Field

The present disclosure generally relates to an electric power transmission and/or distribution substation. In particular, an electric power transmission and/or distribution substation comprising an enclosure having a dry region for at least one electrical component and a wet region within the enclosure, is provided.

### Background

Water can cause significant damages to electrical components of a substation, such as switching devices. Although the substation may have a rain proof enclosure, condensation might occur due to changes in outdoor temperature and/or humidity. For example, if the temperature of the surroundings outside the enclosure is sufficiently lower than the temperature within the enclosure, there might be a risk of condensation on interior surfaces of the enclosure. As the condensation proceeds on these surfaces, water drops will form and might ultimately fall down on, and/or flow to, sensitive electrical components and damage the electrical components.

One known solution for avoiding problems with condensation is to install a heater within the enclosure. However, although an expensive heater is provided, it might not be powerful enough to prevent the formation of water drops.

CN 204030335 U discloses a housing for preventing condensed water from dripping to components within the interior of the housing. The housing comprises lower inlet ports at the side walls and a vertically protruding upper turret to establish a circulation of air. Two condensation prevention sloping plates are provided to completely block the interior from dripping water.

Water collected on upper surfaces of the sloping plates is guided to the outside of the housing through drainage holes.

JP H06 217424 A discloses an electric machine containing box having a drip-proof board covering an electric machine while inclining in one direction. The drip-proof board is split, in the inclining direction, into a plurality of drip-proof pieces which are overlapped, at the edge parts thereof, through a predetermined gap such that the rear surface at the end of upper drip-proof piece covers the surface at the end of lower drip-proof piece.

CN 102394479 A discloses an anti-condensation electrical equipment box. A water collecting plate is installed below a top of a box body. A plurality of water guide grooves that are adjacent in order are arranged above the water collecting plate; and a plurality of vents are opened on a top between the adjacent water guide grooves. A baffle plate is arranged above each of the vent; the size of each of the baffle plate at least can block a water drop falling in the vent; the baffle plates are fixed at the upper end of the water collecting plate by supports; and exhaust channels are formed at gaps that are below the baffle plates and are between the side walls of the water guide grooves at the two sides.

### Summary

One object of the present disclosure is to provide a substation that reduces the risk of exposing electrical components to water.

A further object of the present disclosure is to provide a substation that can avoid problems with water condensation with a simple design.

A still further object of the present disclosure is to provide a substation that can avoid problems with water condensation in a reliable manner.

A still further object of the present disclosure is to provide a substation with which the need for a heater can be eliminated or at least reduced.

According to the invention, there is provided an electric power transmission and/or distribution substation comprising an enclosure for housing electrical components, the enclosure comprising an upper structure which is constituted by an interior roof, side wall structures, and at least one electrical component provided in a dry region enclosed by the upper structure and the side wall structures, wherein the upper structure comprises a downwardly directed interior profile comprising at least one inclined surface and at least one drip section, wherein the at least one inclined surface is arranged to guide condensed water collected on the inclined surface towards an associated drip section, and wherein the at least one drip section is arranged vertically above a wet region horizontally outside of the dry region and enclosed by the upper structure and the side wall structures, and wherein the upper structure comprises two middle inclined plate members and two outer horizontal plate members.

Condensed water collected on the at least one inclined surface is thus allowed to travel by means of gravity to an associated drip section within the enclosure. As the water drops on the drip section have increased in size, they are allowed to fall down, within the enclosure, to the wet region.

The housing in CN 204030335 U is designed to prevent condensed water from dripping into the interior of the housing instead of providing a controlled dripping into the interior. If condensed water is collected on the condensation prevention sloping plates in CN 204030335 U, the dripping is random and not controlled.

Although the substation according to the present disclosure may comprise solutions to reduce the occurrence of condensation, the substation is not only designed to prevent water from dripping inside the enclosure, but is instead also designed to allow water drops to fall in a controlled manner to one or more wet regions inside the enclosure in case condensation occurs.

The inclined surface may be substantially flat and may be oriented at an angle with respect to a horizontal direction that is large enough to allow condensed water collected on the inclined surface to be guided along the inclined surface towards the associated drip section as a water stream by means of gravity, instead of dripping downwardly from the surface. The exact angle may differ depending on, for example, surface properties of the inclined surface, air flow, implementation etc. Alternatively, or in addition, the inclined surface may comprise one or several slightly rounded surface sections, e.g. a surface section that is convex towards the at least one electrical component.

The term "dry region" defines a region below the interior profile where no dripping or substantially no dripping occurs, e.g. below the at least one inclined surface. Correspondingly, the term "wet region" defines a region below the interior profile where dripping is allowed and/or initiated, e.g. below the at least one drip section. The dry region may be regarded as a vertical passage free from water drippage and the wet region may be regarded as a vertical passage where water drippage is allowed to occur. Throughout the present disclosure, the dry region may thus alternatively be referred to as a first region vertically below the at least one inclined surface and the wet region may thus alternatively be referred to as a second region vertically below the at least one drip section. A drip section according to the present disclosure may alternatively be referred to as a drip area or drip region.

The interior of the enclosure comprising a dry region and a wet region may be enclosed by two or more wall structures, such as four wall structures. In case the interior of the enclosure is enclosed by four wall structures, each wall structure may or may not constitute an outer wall of the substation. For example, the interior of the enclosure may be enclosed by two outer wall structures of the substations and two inner or intermediate wall structures. Such inner wall structures may for example delimit a medium voltage compartment from a transformer compartment and a contact arrangement compartment of the substation.

The interior profile of the upper structure may comprise regions in addition to the at least one inclined surface and the at least one drip section. For example, the at least one inclined surface may be designed to guide water collected thereon towards, but not all the way to, an associated drip section. In this case, an intermediate guide structure for guiding the water from the at least one inclined surface to an associated drip section may be provided. The inclined surface may however be arranged to guide water all the way to the associated drip section.

The inclined surface may have a low friction component in order to enhance the guiding of condensed water towards the associated drip section. The drip section may or may not be flat. For example, the drip section may be provided with one or more drip initiating structures, e.g. protrusions, to more accurately initiate water drops to fall down to the wet region. In case the drip section is flat, it may be oriented substantially horizontally.

The side wall structures may be constituted by lateral walls. The side wall structures may be the outmost side wall structures of the substation and/or inner side wall structures of the substation. The substation may have a general appearance of a house. The side wall structures may be substantially vertically oriented. The enclosure may alternatively be referred to as a housing or casing.

The substation according to the present disclosure may be used in a power transmission system. Thus, according to one aspect, there is provided a power transmission system comprising at least one electric power transmission and/or distribution substation as described herein.

As used herein, a horizontal direction is a direction substantially parallel with a ground surface on which the substation is placed and a vertical direction is a direction substantially perpendicular to the horizontal direction. A substantially perpendicular/parallel relationship as used herein includes a perfectly perpendicular/parallel relationship as well as angular deviations from a perfectly perpendicular/parallel relationship with up to 5°, such as up to 2°.

The upper structure is constituted by an interior roof. Such interior roof may be constituted by an interior roof of the enclosure or an interior roof of the substation. In each case, the upper structure constituted by an interior roof may be arranged vertically below an exterior or outer roof of the enclosure or the substation.

The exterior roof may have two inclined roof sections in a generally upside down V-shape. According to one variant, the exterior roof is closed, e.g. the exterior roof does not comprise any ventilation opening, such as a ventilation turret or a ventilation chimney. In this variant, the exterior roof may form the topmost element of the substation, with no other elements protruding vertically above it.

Each electrical component within the enclosure may be provided in the dry region. In this case, only mechanical components that are not sensitive to water, such as supports and frames for the electrical components, may be provided in, or extend into, the wet region. Also non-electrical components sensitive to water may be provided in the dry region.

As an alternative, only some electrical components are provided in within the dry region while some, e.g. less critical or better protected, electrical components are provided in the wet region. According to one variant, no electrical components of the entire substation are provided in a wet region.

The dry region may be centrally disposed in a horizontal direction between two of the side wall structures. In this case, the enclosure may comprise only one wet region adjacent to the dry region or one wet region adjacent to both sides of the dry region (i.e. two wet regions), as seen in this horizontal direction.

The dry region may have a width of 50% to 90% of the width between two of the side wall structures. The remaining width may be fully or partly constituted by one or more wet regions.

The upper structure may comprise at least one substantially horizontal plate member to form the at least one drip section. The at least one horizontal plate member may have a substantially flat appearance. The at least one horizontal plate member may also have an elongated appearance, as seen in a longitudinal horizontal direction of the substation or enclosure.

The upper structure comprises two middle inclined plate members and two outer horizontal plate members. An associated drip section may be provided for each inclined plate member. Alternatively, one or more drip sections may each be associated with two or more inclined plate members. For example, two inclined plate members may be arranged to guide condensed water collected on the respective inclined surface towards the same drip section.

The drip section does not necessarily have to be formed by the horizontal plate member. Alternatively, or in addition, the drip section may be formed at the junction between, or in a gap between, the at least one inclined plate member and the associated horizontal plate member.

It is also possible to provide a gap between at least one inclined plate member and the horizontal plate member dimensioned to allow water collected on an upwardly directed profile of the inclined plate member (e.g. between an exterior roof and an interior roof) to be guided towards the gap. In this case, the gap may constitute the drip section or a part of the drip section (e.g. together with a downwardly directed surface of the horizontal plate member).

According to the invention the upper structure comprises two middle inclined plate members and two outer horizontal plate members, as seen in a horizontal direction. Such two middle inclined members may or may not be centrally disposed within the enclosure in the horizontal direction. The two middle inclined plate members may form a generally upside down V-shape. The two middle inclined plate members may be connected at their tops. Alternatively, a small gap may be provided between the tops of the two middle inclined plate members.

The at least one inclined plate member may have a substantially flat appearance. The at least one inclined plate member may also have an elongated appearance, as seen in a longitudinal horizontal direction of the substation or enclosure.

The at least one inclined plate member may be angled 5° to 70°, such as 15° to 70°, such as 20° to 70°, such as 20° to 30°, with respect to an associated horizontal plate member. Of course, in case no horizontal plate member is provided, the inclined plate member may be angled with the same angular intervals with respect to a horizontal direction.

The interior profile may comprise two drip sections from which condensed water collected on the interior profile can drip to two wet regions and wherein the dry region is horizontally between the two wet regions.

The substation may be a compact secondary substation (CSS). The compact secondary substation may comprise a medium voltage compartment, a transformer compartment and a low voltage compartment. The electrical components may in this case comprise, but are not limited to, a medium voltage switchgear, distribution transformers, low voltage switchboards, connectors and auxiliary equipment. A medium voltage and a low voltage, as referred to herein, may be in the range of 12-24 kV and 100-1000 V, respectively.

The enclosure may constitute a medium voltage compartment. In case the substation comprises a medium voltage compartment, a transformer compartment and a low voltage compartment, the enclosure may only house electrical components of the medium voltage compartment. For example, the enclosure may house an electrical component constituted by a medium voltage switching device. Alternatively, several enclosures as described herein may be provided to house electrical components of each of a medium voltage compartment, a transformer compartment and a low voltage compartment, respectively. One single enclosure, as described herein, may however also be used to house a medium voltage compartment, a transformer compartment and a low voltage compartment.

### Brief Description of the Drawings

Further details, advantages and aspects of the present disclosure will become apparent from the following embodiments taken in conjunction with the drawings, wherein:
- Fig. 1:: schematically represents a lateral side view of a substation;
- Fig. 2:: schematically represents a longitudinal cross sectional view of section A-A of the substation in Fig. 1.

### Detailed Description

In the following, an electric power transmission and/or distribution substation comprising an enclosure having a dry region for at least one electrical component and a wet region within the enclosure will be described. The same reference numerals will be used to denote the same or similar structural features.

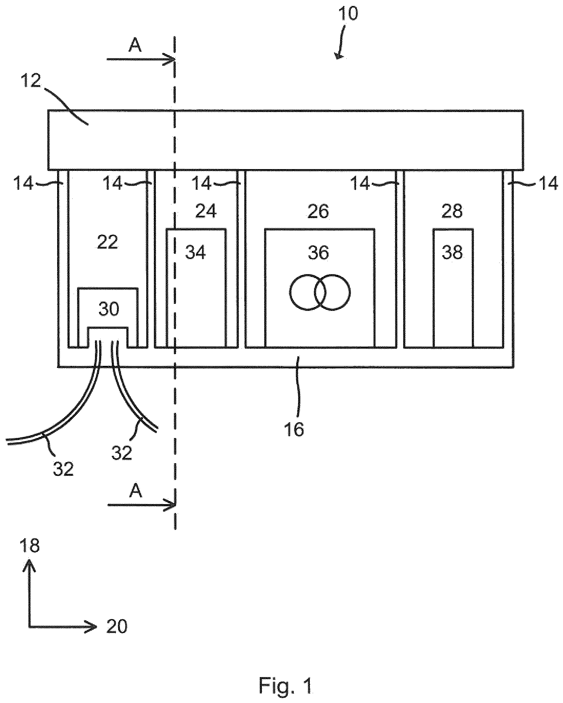

Fig. 1 schematically represents a lateral side view of a substation 10. The substation 10 in this implementation has a general appearance of a house and comprises an exterior roof 12 having two inclined roof sections in a generally upside down V-shape, vertical side wall structures 14 and a base structure 16. In Fig. 1, the exterior roof 12 is closed. Fig. 1 further shows a vertical direction 18 and a longitudinal horizontal direction 20. The point at which the two inclined roof sections of the exterior roof 12 meet is the uppermost position of the substation 10.

The substation 10 further comprises several intermediate or inner side wall structures 14 such that several compartments are defined within the substation 10. In this implementation, the substation 10 is a compact secondary substation (CSS) comprising a contact arrangement compartment 22, a medium voltage compartment 24, a transformer compartment 26 and a low voltage compartment 28.

The contact arrangement compartment 22 houses a contact arrangement 30 to which power lines 32 are connected. The medium voltage compartment 24 houses a medium voltage switching device 34, the transformer compartment 26 houses a transformer 36 and the low voltage compartment 28 houses a low voltage switching device 38. At least the medium voltage compartment 24 is provided within an enclosure, as will be described in more detail below.

The substation 10 is a part of a power transmission system. The substation 10 may be used to switch down, in a safe and reliable way, the voltage of distributed power to suitable levels which are useful for a wide type of users, such as utility companies, various types of plants, e.g. steel works, petrochemical plants, etc.

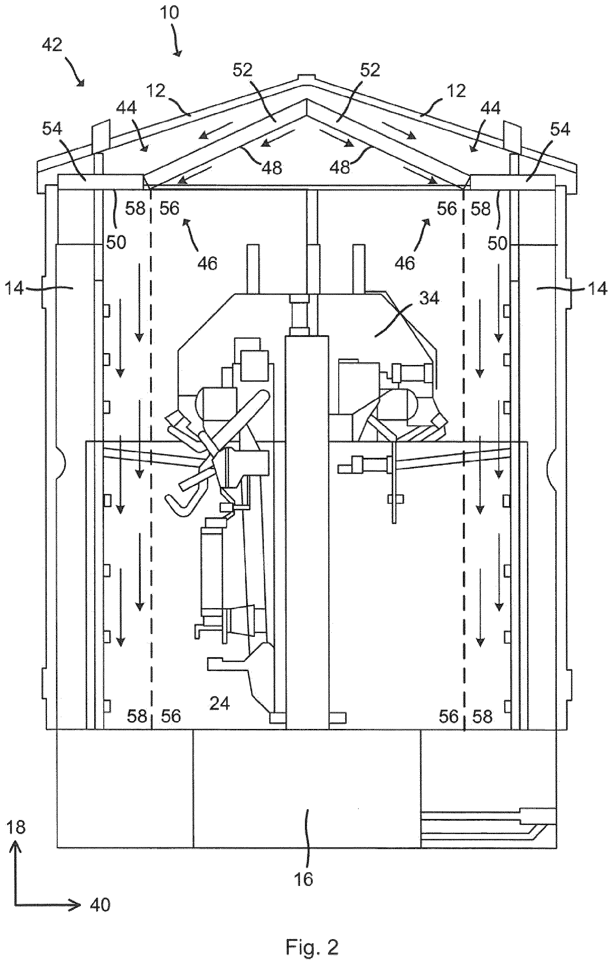

Fig. 2 schematically represents a longitudinal cross sectional view of section A-A of the substation 10 in Fig. 1. Fig. 2 further shows a lateral horizontal direction 40 that is perpendicular to the longitudinal horizontal direction 20 in Fig. 1.

As shown in Fig. 2, the substation 10 comprises an enclosure 42 housing electrical components of the medium voltage compartment 24, such as the medium voltage switching device 34. The enclosure 42 comprises an upper structure 44 and two side wall structures 14.

The enclosure 42 comprises a downwardly directed interior profile 46 comprising two inclined surfaces 48 and two drip sections 50. The left inclined surface 48 is arranged to guide condensed water collected thereon towards the left drip section 50 and the right inclined surface 48 is arranged to guide condensed water collected thereon towards the right drip section 50.

In the implementation of Fig. 1, the upper structure 44 comprises two middle inclined plate members 52 and two outer horizontal plate members 54. The upper structure 44 forms an interior roof below the exterior roof 12 of the substation 10. The inclined plate members 52 and the horizontal plate members 54 are substantially flat and extend also in the longitudinal horizontal direction 20 (not shown in Fig. 2).

The two inclined plate members 52 are connected at their tops to form a generally upside down V-shape. However, a small gap may alternatively be provided between the tops of the inclined plate members 52.

The lower side of each inclined plate member 52 defines a respective substantially flat inclined surface 48. The lower side of each horizontal plate member 54 defines a respective drip section 50, possibly together with a small gap between the inclined plate members 52 and a respective horizontal plate member 54. In Fig. 1, each drip section 50 is constituted by a flat lower horizontal surface of a respective horizontal plate member 54.

In case a small gap is provided between the inclined plate members 52 and a respective horizontal plate member 54, also condensed water on areas between the upper structure 44 and the exterior roof 12 may be guided to the drip section 50 along the upper inclined surfaces of the inclined plate members 52 and through these gaps.

A dry region 56 is provided below the two inclined surfaces 48 and a wet region 58 is provided below each drip section 50. As can be seen in Fig. 2, the two wet regions 58 are provided within the enclosure 42 more specifically just inside the side wall structures 14. The wet regions 58 and the dry region 56 extend in the longitudinal horizontal direction 20 (not shown in Fig. 2). The wet regions 58 and the dry region 56 may for example extend in the longitudinal horizontal direction 20 between an intermediate side wall structure 14 bordering to the contact arrangement compartment 22 and an intermediate side wall structure 14 bordering to the transformer compartment 26.

In the implementation in Fig. 2, each inclined surface 48 is flat and is angled 20° to 30° with respect to the lateral horizontal direction 40. Furthermore, the dry region 56 is centrally disposed between two side wall structures 14 and occupies approximately 70% of the width between the two side wall structures 14, as seen in the lateral horizontal direction 40. Each wet region 58 occupies approximately 15% of the width between the two side wall structures 14, as seen in the lateral horizontal direction 40.

When condensation is formed on the inclined surfaces 48, for example due to the rising of warm air containing moisture, the condensed water will be guided along the inclined surfaces 48 towards a respective drip section 50 by means of gravity. Thus, instead of dripping down from the inclined surfaces 48 to the dry region 56 containing the sensitive electrical components 34, the water will be guided to a respective drip section 50 where the water may drip down to a wet region 58 without damaging the electrical components 34. The water may drip through the wet region 58 and down to the base structure 16 where it is collected. Each inclined surface 48 is thus arranged to guide condensed water collected on the inclined surface 48 towards an associated drip section 50. Furthermore, each drip section 50 is arranged vertically above a wet region 58 horizontally outside of the dry region 56 and enclosed by the upper structure 44 and the side wall structures 14.

In this manner, the electrical components 34 provided inside the enclosure 42 can be reliably protected from dripping condensed water with a simple construction. The need for a heater to heat the air within the enclosure 42 can thus be reduced or eliminated.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. Electric power transmission and/or distribution substation (10) comprising an enclosure (42) for housing electrical components (34, 36, 38), the enclosure (42) comprising:
- an upper structure (44) which is constituted by an interior roof;
- side wall structures (14); and
- at least one electrical component (34, 36, 38) provided in a dry region (56) enclosed by the upper structure (44) and the side wall structures (14);
wherein the upper structure (44) comprises a downwardly directed interior profile (46) comprising at least one inclined surface (48) and at least one drip section (50);
wherein the at least one inclined surface (48) is arranged to guide condensed water collected on the inclined surface (48) towards an associated drip section (50);
wherein the at least one drip section (50) is arranged vertically above a wet region (58) horizontally outside of the dry region (56) and enclosed by the upper structure (44) and the side wall structures (14); and wherein the upper structure (44) comprises two middle inclined plate members (52) **characterized in that** the upper structure (44) further comprises two outer horizontal plate members (54).

2. The substation (10) according to claim 1, wherein each electrical component (34, 36, 38) within the enclosure (42) is provided in the dry region (56).

3. The substation (10) according to any of the preceding claims, wherein no electrical components (34, 36, 38) of the substation (10) are provided in the wet region (58).

4. The substation (10) according to any of the preceding claims, wherein the dry region (56) is centrally disposed in a horizontal direction (20) between two of the side wall structures (14).

5. The substation (10) according to any of the preceding claims, wherein the dry region (56) has a width of 50% to 90% of the width between two of the side wall structures (14).

6. The substation (10) according to any of the preceding claims, wherein the upper structure (44) comprises at least one substantially horizontal plate member (54) to form the at least one drip section (50).

7. The substation (10) according to claim 6, wherein the at least one horizontal plate member (54) has a substantially flat appearance.

8. The substation (10) according to any of the preceding claims, wherein the upper structure (44) comprises at least one inclined plate member (52) to form the at least one inclined surface (48).

9. The substation (10) according to any of the preceding claims, wherein the at least one inclined plate member (52) has a substantially flat appearance.

10. The substation (10) according to claim 8 or 9, wherein the at least one inclined plate member (52) is angled 5° to 70°, with respect to an associated horizontal plate member (54).

11. The substation (10) according to any of the preceding claims, wherein the interior profile (46) comprises two drip sections (50) from which condensed water collected on the interior profile (46) can drip to two wet regions (58) and wherein the dry region (56) is horizontally between the two wet regions (58).

12. The substation (10) according to any of the preceding claims, wherein the substation (10) is a compact secondary substation (CSS).

13. The substation (10) according to any of the preceding claims, wherein the enclosure (42) constitutes a medium voltage compartment (24).

## Patentansprüche

1. Unterstation (10) zur Übertragung und/oder Verteilung elektrischer Leistung, die ein Gehäuse (42) zum Aufnehmen elektrischer Bauteile (34, 36, 38) umfasst, wobei das Gehäuse (42) Folgendes umfasst:
- einen Oberbau (44), der durch ein Innendach gebildet wird;
- Seitenwandstrukturen (14) und
- mindestens ein elektrisches Bauteil (34, 36, 38), das in einem Trockenbereich (56), der durch den Oberbau (44) und die Seitenwandstrukturen (14) umschlossen wird, vorgesehen ist; wobei
der Oberbau (44) ein nach unten gerichtetes Innenprofil (46) umfasst, das mindestens eine geneigte Fläche (48) und mindestens einen Tropfabschnitt (50) umfasst;
die mindestens eine geneigte Fläche (48) angeordnet ist, um kondensiertes Wasser, das auf der geneigten Fläche (48) gesammelt wird, zu einem zugeordneten Tropfabschnitt (50) zu leiten;
der mindestens eine Tropfabschnitt (50) vertikal über einem Nassbereich (58) horizontal außerhalb des Trockenbereichs (56) angeordnet ist und durch den Oberbau (44) und die Seitenwandstrukturen (14) eingeschlossen ist und
der Oberbau (44) zwei geneigte Mittelplattenelemente (52) umfasst, wobei der Oberbau (44) ferner **gekennzeichnet ist durch** zwei horizontale Außenplattenelemente (54).

2. Unterstation (10) nach Anspruch 1, wobei jedes elektrische Bauteil (34, 36, 38) im Gehäuse (42) im Trockenbereich (56) vorgesehen ist.

3. Unterstation (10) nach einem der vorhergehenden Ansprüche, wobei keine elektrischen Bauteile (34, 36, 38) der Unterstation (10) im Nassbereich (58) vorgesehen sind.

4. Unterstation (10) nach einem der vorhergehenden Ansprüche, wobei der Trockenbereich (56) in einer horizontalen Richtung (20) zwischen zwei der Seitenwandstrukturen (14) zentral angeordnet ist.

5. Unterstation (10) nach einem der vorhergehenden Ansprüche, wobei der Trockenbereich (56) eine Breite im Bereich von 50 % bis 90 % der Breite zwischen zwei der Seitenwandstrukturen (14) besitzt.

6. Unterstation (10) nach einem der vorhergehenden Ansprüche, wobei der Oberbau (44) mindestens ein im Wesentlichen horizontales Plattenelement (54) umfasst, um den mindestens einen Tropfabschnitt (50) zu bilden.

7. Unterstation (10) nach Anspruch 6, wobei das mindestens eine horizontale Plattenelement (54) eine im Wesentlichen flache Erscheinungsform besitzt.

8. Unterstation (10) nach einem der vorhergehenden Ansprüche, wobei der Oberbau (44) mindestens ein geneigtes Plattenelement (52) umfasst, um die mindestens eine geneigte Fläche (48) zu bilden.

9. Unterstation (10) nach einem der vorhergehenden Ansprüche, wobei das mindestens eine geneigte Plattenelement (52) eine im Wesentlichen flache Erscheinungsform besitzt.

10. Unterstation (10) nach Anspruch 8 oder 9, wobei das mindestens eine geneigte Plattenelement (52) im Bereich von 5° bis 70° in Bezug auf ein zugeordnetes horizontales Plattenelement (54) angewinkelt ist.

11. Unterstation (10) nach einem der vorhergehenden Ansprüche, wobei das Innenprofil (46) zwei Tropfabschnitte (50) umfasst, aus denen kondensiertes Wasser, das auf dem Innenprofil (46) gesammelt wurde, in zwei Nassbereiche (58) tropfen kann, und der Trockenbereich (56) horizontal zwischen den zwei Nassbereichen (58) liegt.

12. Unterstation (10) nach einem der vorhergehenden Ansprüche, wobei die Unterstation (10) eine kompakte sekundäre Unterstation (CSS) ist.

13. Unterstation (10) nach einem der vorhergehenden Ansprüche, wobei das Gehäuse (42) eine Mittelspannungskammer (24) bildet.

## Revendications

1. Sous-station de transmission et/ou de distribution d'énergie électrique (10) comprenant une enceinte (42) pour loger des composants électriques (34, 36, 38), l'enceinte (42) comprenant :
- une structure supérieure (44) qui est constituée par un toit intérieur ;
- des structures de parois latérales (14) ; et
- au moins un composant électrique (34, 36, 38) prévu dans une région sèche (56) entourée par la structure supérieure (44) et les structures de parois latérales (14) ;
la structure supérieure (44) comprenant un profil intérieur dirigé vers le bas (46) comprenant au moins une surface inclinée (48) et au moins une section d'égouttement (50) ;
l'au moins une surface inclinée (48) étant agencée pour guider l'eau condensée recueillie sur la surface inclinée (48) vers une section d'égouttement associée (50) ;
l'au moins une section d'égouttement (50) étant agencée verticalement au-dessus d'une région humide (58) horizontalement à l'extérieur de la région sèche (56) et entourée par la structure supérieure (44) et les structures de parois latérales (14) ; et
la structure supérieure (44) comprenant deux éléments de plaque inclinés (52) médians,
**caractérisée en ce que** la structure supérieure (44) comprend en outre deux éléments de plaque horizontaux extérieurs (54).

2. Sous-station (10) selon la revendication 1, chaque composant électrique (34, 36, 38) à l'intérieur du boîtier (42) étant prévu dans la région sèche (56).

3. Sous-station (10) selon l'une quelconque des revendications précédentes, aucun composant électrique (34, 36, 38) de la sous-station (10) n'étant prévu dans la région humide (58).

4. Sous-station (10) selon l'une quelconque des revendications précédentes, la région sèche (56) étant disposée au centre dans une direction horizontale (20) entre deux des structures de parois latérales (14).

5. Sous-station (10) selon l'une quelconque des revendications précédentes, la région sèche (56) ayant une largeur de 50 % à 90 % de la largeur entre deux des structures de parois latérales (14).

6. Sous-station (10) selon l'une quelconque des revendications précédentes, la structure supérieure (44) comprenant au moins un élément de plaque sensiblement horizontal (54) pour former l'au moins une section d'égouttement (50).

7. Sous-station (10) selon la revendication 6, l'au moins un élément de plaque horizontal (54) ayant un aspect sensiblement plat.

8. Sous-station (10) selon l'une quelconque des revendications précédentes, la structure supérieure (44) comprenant au moins un élément de plaque incliné (52) pour former l'au moins une surface inclinée (48).

9. Sous-station (10) selon l'une quelconque des revendications précédentes, l'au moins un élément de plaque incliné (52) ayant un aspect sensiblement plat.

10. Sous-station (10) selon la revendication 8 ou 9, l'au moins un élément de plaque incliné (52) étant incliné de 5° à 70° par rapport à un élément de plaque horizontal associé (54).

11. Sous-station (10) selon l'une quelconque des revendications précédentes, le profil intérieur (46) comprenant deux sections d'égouttement (50) à partir desquelles de l'eau condensée recueillie sur le profil intérieur (46) peut s'égoutter vers deux régions humides (58) et la région sèche (56) étant située horizontalement entre les deux régions humides (58).

12. Sous-station (10) selon l'une quelconque des revendications précédentes, la sous-station (10) étant une sous-station secondaire compacte (CSS).

13. Sous-station (10) selon l'une quelconque des revendications précédentes, le boîtier (42) constituant un compartiment moyenne tension (24).
